# FASCICULE DE BREVET EUROPEEN

(11) **EP 3 839 706 B1**
(45) Date de publication et mention de la délivrance du brevet: **05.07.2023**
(21) Numéro de dépôt: 19218765.6
(22) Date de dépôt: 20.12.2019
(51) Int. Cl.: G06F 3/041, G06F 3/042, G06F 3/043, G06F 3/044, G06F 3/04883

(54) **PROCEDE ET DISPOSITIF DE DETERMINATION DE POSITION D'UN OBJET SUR UNE SURFACE DONNEE**
VERFAHREN UND VORRICHTUNG ZUR BESTIMMUNG DER POSITION EINES OBJEKTS AUF EINER VORGEGEBENEN FLÄCHE
METHOD AND DEVICE FOR DETERMINING THE POSITION OF AN OBJECT ON A GIVEN SURFACE

(43) Date de publication de la demande: 23.06.2021
(73) Titulaire: The Swatch Group Research and Development Ltd, 2074 Marin (CH)
(72) Inventeur: Pfeuti, Jean-Nicolas, 2068 Hauterive (CH); CASAGRANDE, Arnaud, 2014 Bôle (CH)
(74) Mandataire: ICB SA

(56) Documents cités:
- WO-A1-2012/061956
- WO-A1-2014/200736
- WO-A1-2019/191126
- WO-A2-2005/026938
- US-A1- 2012 166 145
- US-A1- 2013 076 374
- US-A1- 2014 152 624
- US-A1- 2014 267 155
- US-A1- 2016 077 665
- US-A1- 2018 275 831

## Description

### DOMAINE TECHNIQUE DE L'INVENTION

L'invention concerne un procédé de détection de présence et/ou de détermination de position d'au moins un objet sur une surface donnée de mesure d'un dispositif électronique.

L'invention concerne également un dispositif électronique de détection de présence et/ou de détermination de position d'au moins un objet sur une surface de mesure pour la mise en oeuvre du procédé.

### ETAT DE LA TECHNIQUE

La détection d'une position d'un objet, tel qu'un doigt d'un utilisateur sur un écran, par exemple un écran tactile, est bien connue. Plusieurs technologies peuvent être employées à cette fin. Ces technologies reposent par exemple sur la mesure d'une résistance ou d'une capacité électrique, ou aussi sur l'interruption, c'est-à-dire le masquage, de rayons lumineux ou sur l'atténuation d'ondes de surface, telles que des ultrasons.

On peut classer ces technologies dans deux catégories. Une des catégories repose sur une segmentation discrète de la surface donnée de mesure, et une autre des catégories repose sur une variation linéaire d'une grandeur le long de deux axes X, Y. Les systèmes à capteurs capacitifs et ceux basés sur la lumière tombent généralement dans la catégorie à segmentation discrète. Tous les écrans tactiles capacitifs, par exemple, sont constitués soit d'un réseau de lignes et de colonnes qui se croisent sans contact en étant séparés par une couche isolante, soit d'un ensemble de plages discrètes connectées chacune individuellement à un circuit de détection. Généralement dans l'état de la technique, les systèmes basés sur la lumière utilisent également des sources de lumière et des capteurs disposés en vis-à-vis, constituant un réseau de lignes et colonnes. Dans ces systèmes susmentionnés, c'est l'information d'activation d'une plage discrète ou d'une intersection entre une colonne et une ligne qui donnent la position. Les écrans à technologie résistive ou d'ondes de surface utilisent une variation linéaire, mesurée selon deux axes orthogonaux, pour déterminer la position de contact.

Dans le cas d'un écran tactile de type capacitif, constitué d'un réseau d'électrodes, la détection de l'activation d'une touche tactile se base sur une mesure de modification de fréquence du signal par liaison à un oscillateur comme décrit dans le brevet EP 1 324 162 B1. Cela ne permet pas d'utiliser l'écran tactile dans n'importe quel milieu susceptible de modifier cette fréquence par exemple sous l'eau, avant l'activation de la ou des touches par un doigt de l'écran tactile. Il est possible de faire varier ou moduler la fréquence du signal à chaque électrode pour détecter plus sûrement l'activation d'une touche tactile, mais l'identification d'une telle activation requiert un traitement un peu plus conséquent pour le processeur de montre, ce qui ne réduit pas la consommation d'énergie souhaitée.

Avec un réseau d'électrodes de touches capacitives diffusées sur le verre (Indium Tin Oxyde), il est toujours nécessaire de connecter chaque électrode de capteur capacitif par une piste de connexion à un circuit de mesure. Comme aussi chaque piste de connexion est d'une certaine largeur, l'agencement de ces différentes pistes de connexion pose inévitablement le problème de place perdue et avec parfois une ou deux couches d'isolation pour le passage des pistes de connexion entre les électrodes des touches tactiles et le circuit de mesure. De plus, plusieurs condensateurs parasites ou de masse sont présents de par ces connexions électriques, et il faut que le circuit de mesure en tienne compte en définissant et calibrant pour les différentes mesures, les perturbations induites par chaque condensateur parasite. Cela complique l'agencement d'un tel réseau d'électrodes capacitives.

La demande de brevet EP 0 838 737 B1 décrit un ensemble d'électrodes de capteurs capacitifs disposées proche l'une de l'autre sous un verre de montre. Chaque électrode est reliée par un conducteur électrique à un circuit de mesure. Ainsi comme susmentionné, toutes les électrodes sont reliées par un conducteur électrique, ce qui pose un problème de place perdue dans la boîte de montre et de plus, plusieurs condensateurs parasites ou de masse sont présents.

La demande de brevet US 2014/0152624 A1 décrit un dispositif sensible au toucher, tel qu'un écran tactile pour des tablettes, téléphones portables, consoles de jeux et autres types de dispositifs. Il s'agit principalement d'un dispositif sensible au toucher de type optique. Le dispositif comprend un contrôleur, un circuit d'entraînement d'émetteur/détecteur, un assemblage de surface sensible au toucher (surface active), et un processeur lié au contrôleur. Des émetteurs et des détecteurs de l'assemblage sont disposés en périphérie de la surface active.
La demande de brevet US 2013/0076374 A1 décrit un système pour capter un objet chargé sur une surface sensible, en particulier au changement du signal de sortie d'un filtre, qui est détecté par le détecteur afin d'obtenir la trajectoire suivie, la vitesse ou la position de l'objet. Le système comprend un générateur de signal, un filtre, et un détecteur. Le générateur de signal, qui est couplé au filtre, génère au moins un signal d'excitation. Le filtre comprend un circuit résonnant ayant un élément d'impédance. Un objet, tel qu'un doigt peut être disposé sur le filtre pour obtenir un signal de sortie à variation d'impédance en fonction du doigt posé sur le filtre. Il est montré un réseau d'électrodes capacitives reliées chacune par l'intermédiaire d'un multiplexeur. Chaque électrode de captation d'un objet chargé est prévue avec une fréquence de détection différente des autres.

La demande de brevet US 2012/0166145 A1 décrit un procédé pour déterminer une réponse acoustique attribuée à une position d'un objet disposé sur une surface sensible au toucher. Il est cherché de réduire le bruit dans un signal capté. Le dispositif sensible au toucher comprend une surface d'interaction par exemple une plaque de verre et au moins un transducteur, qui peut être piézoélectrique, piézoélectrique capacitif, ou autres. Le dispositif sensible au toucher est adapté pour identifier la position d'un objet de contact sur le dispositif. Le dispositif peut faire partie d'un dispositif électronique portable. La demande WO 2012/061956 A1 concerne un panneau tactile multipoint capacitif à un seul axe, et concerne également un système et un procédé associés. Un panneau tactile multipoint comporte un substrat et plusieurs lignes conductrices formées sur une face du substrat et disposées selon un seul axe. Un circuit de commande, servant à produire un signal de courant alternatif, est couplé fonctionnellement aux lignes conductrices du panneau tactile multipoint, et un circuit de mesure, servant à recevoir un signal de sortie selon le signal de courant alternatif afin de déterminer la position du contact, est couplé fonctionnellement aux lignes conductrices du panneau tactile multipoint.

### RESUMÉ DE L'INVENTION

L'invention a donc pour but de pallier les inconvénients de l'état de la technique en fournissant un procédé de détection de présence et/ou de détermination de position d'au moins un objet sur une surface de mesure d'un dispositif électronique, par une analyse de l'influence de l'objet sur des signaux oscillants qui transitent à travers un milieu propice de propagation, et sans encombrement d'un grand nombre de connexions électriques du dispositif électronique.

A cet effet, l'invention concerne un procédé de détection de présence et/ou de détermination d'au moins une position d'au moins un objet sur ou à proximité d'une surface de mesure d'un dispositif électronique, qui comprend les caractéristiques définies dans la revendication indépendante 1.

Des étapes particulières du procédé sont définies dans les revendications dépendante 2 à 8.

Un avantage du procédé réside dans le fait, que le milieu de propagation de signaux oscillants définit une fonction de transfert des signaux oscillants variant en fonction de la position d'un objet, tel qu'un doigt, sur une surface de mesure du dispositif électronique. Il est ainsi mesuré par les points de sortie d'un circuit de mesure un couplage ou une atténuation induite par la présence d'au moins un objet, tel qu'un doigt, sur ou à proximité de la surface de mesure pour déterminer la position de l'objet. Le signal de sortie peut être numérisé et contrôlé par rapport à des paramètres de position mémorisés, notamment suite à une phase d'apprentissage avec une machine informatique d'apprentissage des positions déterminées. Dans les exemples suivants non compris dans les revendications, il peut s'agir d'un milieu de propagation, qui est un verre d'un instrument portable avec des faisceaux lumineux réfléchis entre une surface supérieure de mesure et une surface inférieure. De même non compris dans les revendications dans le cas d'un signal ultrasonore par exemple à onde de surface, le milieu de propagation peut être aussi la surface de mesure sur un verre de montre ou à travers l'épaisseur du verre par des électrodes piézoélectriques disposées sur une surface inférieure ou une surface supérieure du verre de montre.

Avantageusement, le circuit de mesure du dispositif électronique reste le même dans tout type de dispositif électronique sans influence sur la forme, les dimensions du milieu de propagation et de la zone de détection sur la surface de mesure. La phase d'apprentissage et configuration du circuit de mesure est identique en utilisant des signaux oscillants électriques ou optiques ou ultrasonores ou électromagnétiques. Un tel dispositif électronique peut facilement équiper tout type d'instrument portable, tel que par exemple une montre électronique ou électromécanique.

Avantageusement, si le milieu de propagation est un réseau d'électrodes de capteurs capacitif, cela ne repose plus sur une segmentation en lignes et colonnes, ni sur des zones discrètes, mais plutôt sur la variation d'une fonction de propagation selon un axe donné. Plusieurs électrodes sont laissées dans un état flottant sans connexion directe par pistes conductrices au circuit de mesure, car seulement certaines électrodes en périphérie du réseau d'électrode sous forme matricielle sont reliées par pistes conductrices pour la fourniture de signaux oscillants en entrée et la réception de signaux à mesurer en sortie.

Avantageusement, le dispositif électronique à réseau d'électrodes capacitives peut être intégré dans une montre électronique ou électromécanique.

Avantageusement, le dispositif électronique peut être configuré suite à une phase d'apprentissage de telle manière à reconnaître une signature d'une personne ou la reconnaissance de caractère dessiné sur la surface de mesure. Pour ce faire, tout mouvement du doigt sur la surface de mesure est déterminé avec la composante temporelle et avec des paramètres de configuration tenant compte des valeurs X et Y, ainsi que de la composante du temps.

A cet effet, l'invention concerne aussi un dispositif électronique pour la mise en oeuvre du procédé de détection de présence et/ou de détermination d'au moins une position d'un objet sur une surface de mesure, qui comprend les caractéristiques définies dans la revendication indépendante 9.

Des formes d'exécution particulières du dispositif électronique sont définies dans les revendications dépendantes 10 à 15.

### BREVE DESCRIPTION DES FIGURES

L'invention sera décrite ci-après de manière plus détaillée à l'aide des dessins annexés, donnés à titre d'exemples nullement limitatifs, dans lesquels :
- La figure 1 représente partiellement un dispositif électronique pour la détection de présence et/ou détermination de position d'au moins un objet sur une surface donnée de mesure au moyen du principe de variation de signaux oscillants transitant dans un milieu de propagation, qui définit une fonction de transfert des signaux oscillants selon la présente invention,
- la figure 2 représente une forme d'exécution d'un dispositif électronique ayant un réseau d'électrodes sous forme matricielle de capteurs capacitifs, relié à un circuit de mesure pour la détermination de position d'au moins un objet sur une surface donnée de mesure selon l'invention,
- la figure 3 représente une forme particulière de propagation de deux signaux d'entrée orthogonaux pour le procédé, mesurés à un point de sortie dans le milieu de propagation, dépendant d'une fonction de transfert de la modification du rapport signal sur perturbation par rapport à l'emplacement du point de mesure selon l'invention,

- la figure 4 représente un modèle équivalent simple d'un réseau d'électrodes de capteurs capacitifs sous forme matricielle définissant le milieu de propagation avec une structure d'amplificateur de mesure selon l'invention,
- la figure 5 représente une première forme d'exécution d'un réseau d'électrodes de capteurs capacitifs comme milieu de propagation, pour lequel chaque électrode est d'une structure de peigne pour s'imbriquer en partie avec chaque électrode voisine selon l'invention,
- la figure 6 représente une seconde forme d'exécution d'un réseau d'électrodes de capteurs capacitifs comme milieu de propagation, qui est constitué d'électrodes de forme carrée selon l'invention,
- la figure 7 représente une troisième forme d'exécution d'un réseau d'électrodes de capteurs capacitifs comme milieu de propagation, qui est constitué d'électrodes de forme hexagonale selon l'invention,
- la figure 8 représente une forme d'exécution d'un dispositif de mesure et d'excitation faisant partie du circuit de mesure relié au réseau d'électrodes prévu en partie pour la mesure des signaux oscillants représentés à la figure 3,
- la figure 9 représente une première forme d'exécution d'une partie d'un dispositif électronique pour la détermination de position d'au moins un objet sur une surface donnée de mesure dans un milieu de propagation tel qu'un verre pour la propagation d'un signal de lumière non compris dans les revendications,
- la figure 10 représente une seconde forme d'exécution d'une partie d'un dispositif électronique pour la détermination de position d'au moins un objet sur une surface donnée de mesure dans un milieu de propagation tel qu'un verre pour la propagation d'un signal de lumière provenant de deux sources de lumière non compris dans les revendications, et
- la figure 11 représente une troisième forme d'exécution d'une partie d'un dispositif électronique pour la détermination de position d'au moins un objet sur une surface donnée de mesure dans un milieu de propagation tel qu'un verre pour la propagation d'un signal de lumière provenant d'une combinaison de faisceaux de deux sources de lumière non compris dans les revendications.

### DESCRIPTION DETAILLEE DE L'INVENTION

Dans la description suivante, tous les composants d'un dispositif électronique utilisé pour la détection de présence et/ou de détermination de position d'au moins un objet sur une surface donnée de mesure, qui sont bien connus d'un homme du métier dans ce domaine technique, ne sont décrits que de manière simplifiée.

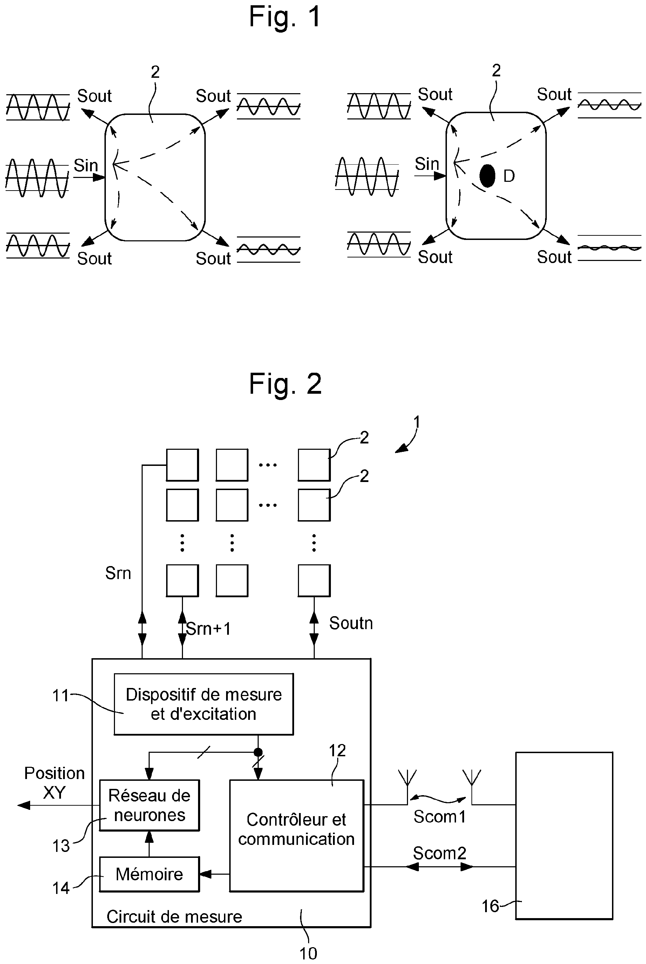

La figure 1 représente partiellement un dispositif électronique notamment pour la mise en oeuvre du procédé de détection de présence et/ou de détermination de position d'au moins un objet D sur ou à proximité d'une surface donnée de mesure du dispositif électronique. Sur le côté gauche de la figure 1 aucun objet n'est présent, alors que sur le côté droit de la figure 1, un objet D est placé sur ou est à proximité d'une position de la surface de mesure dans une zone de détection du dispositif électronique. De préférence, le dispositif électronique peut équiper un instrument portable, tel qu'une montre électronique ou électromécanique.

Dans une variante non couverte par le texte des revendications, un signal oscillant Sin est fourni à un point d'entrée d'une première partie d'un milieu 2 de propagation de signaux oscillants. Chaque signal oscillant d'excitation peut être à une fréquence de l'ordre de 400 kHz sans limitation forcément à cette valeur. Le milieu 2 de propagation définit une fonction de transfert pour le ou les signaux oscillants de sorte que l'amplitude ou toute autre propriété mesurable du ou des signaux oscillants dépend des propriétés locales de ce milieu. Le signal oscillant Sin peut transiter dans le milieu 2 de propagation et être reçu ou capté en un ou plusieurs points de sortie Sout différents et espacés d'une seconde partie du milieu 2 de propagation dans une zone de détection de la surface de mesure.

Sur cette figure 1, quatre points de sortie Sout disposés dans quatre angles du milieu 2 de propagation sont représentés pour couvrir toute une zone de détection de la surface de mesure, mais sans limitation à plus ou moins de points de sortie du signal de mesure de sortie Sout. Il est ainsi mesuré par les points de sortie un couplage ou une atténuation induite par la présence d'au moins un objet D, tel qu'un doigt, sur ou à proximité de la surface de mesure, comme montré sur le côté droit de la figure 1, sur le signal oscillant transitant dans le milieu. On remarque que les signaux oscillants de sortie Sout sur la partie droite du côté droit de la figure 1 ont une amplitude diminuée par rapport à ceux de la partie droite du côté gauche de la figure 1. Par contre, les signaux oscillants de sortie Sout sur la partie gauche du côté droit et du côté gauche de la figure 1 varient en amplitude par rapport au signal oscillant d'entrée Sin, mais ne varient pas avec ou sans objet D sur la surface de mesure. Ainsi, on constate l'influence de l'objet D sur les signaux oscillants transférés de gauche à droite par la modification de la fonction de transfert du milieu.

Comme indiqué ci-dessus, une atténuation du signal oscillant peut aussi être mesurée dans le dispositif électronique même sans la présence de l'objet sur la surface de mesure. Dans ce cas de figure, l'atténuation du signal oscillant, c'est-à-dire l'amplitude diminuée dudit signal oscillant capté, dépend de la distance entre le point d'entrée du signal oscillant Sin et le point de sortie pour le signal Sout à mesurer.

Grâce aux différents points de sortie de mesure du signal oscillant modifié Sout durant son trajet dans le milieu 2 de propagation, un circuit de mesure, non représenté en figure 1, du dispositif électronique est à même de déterminer la position de l'objet D dans la zone de détection de la surface de mesure dépendant de la modification de la fonction de transfert du milieu. Cependant comme le dispositif électronique est possiblement prévu pour équiper une montre électronique ou électromécanique à faible consommation d'énergie, une phase d'apprentissage des différentes positions de l'objet D sur ou à proximité de la surface de mesure peut être effectuée par une machine ou un appareil d'apprentissage en communication avec le dispositif électronique. Dans le cas d'une phase d'apprentissage subséquente éventuelle, qui est ultérieure à la phase de fabrication du produit, une communication sans fil peut être imaginée, dans le but de simplifier l'interface utilisateur et de permettre un apprentissage dédié à un utilisateur donné. Il peut être utilisé un téléphone portable ("smart-phone") avec un programme adapté guidant l'utilisateur par exemple sur différents motifs à effectuer sur le capteur tactile, c'est-à-dire sur une surface de mesure.

Cette phase d'apprentissage permet de déterminer des positions exactes en X et Y de l'objet D sur la surface de mesure par la machine d'apprentissage (utilisant par exemple un système de positionnement robotisé pour définir précisément des positions XY) suite à différentes positions fonction des signaux oscillants mesurés dans le circuit de mesure sur lequel se trouve l'objet D et transmis à la machine d'apprentissage. Les différentes valeurs en X et Y des différentes positions sur la surface de mesure déterminées par la machine d'apprentissage sont transmises et mémorisées dans une mémoire du dispositif électronique. Une fois passé cette phase d'apprentissage, le dispositif électronique peut facilement effectuer une détermination subséquente de positions de tout objet posé sur ou à proximité de la surface de mesure.

Il est prévu de fournir plusieurs signaux oscillants Sin en différents points d'entrée espacés de la première partie du milieu 2 de propagation de telle manière à être reçus par un ou plusieurs points de sortie Sout de la seconde partie du milieu 2 de propagation pour la mesure d'une position de l'objet D sur la surface de mesure. Les différents points d'entrée des signaux oscillants ou les différents points de sortie sont espacés pour permettre une bonne distribution de préférence en périphérie du milieu 2 de propagation de telle manière à déterminer précisément toute position de l'objet dans la zone de détection de la surface de mesure par le circuit de mesure. Cette zone de détection est normalement définie entre les points d'entrée et de sortie ou en les englobant aussi. La présence de l'objet, tel qu'un doigt, sur la surface de mesure affecte les propriétés locales du milieu 2 de propagation, induisant certaines modifications des propriétés du signal reçu par rapport à son emplacement.

Dans la suite de la description, il ne sera fait référence qu'à un milieu de propagation, qui se présente comme un réseau d'électrodes de capteurs capacitifs pour un écran tactile du dispositif électronique.. Aussi, les différentes mesures liées à la fonction de transfert du milieu utilisé peuvent être la phase, l'amplitude, ou encore le temps de vol du signal dans le milieu.

La figure 2 représente une forme d'exécution d'un dispositif électronique 1 constitué d'un réseau d'électrodes 2 de capteurs capacitifs définissant le milieu de propagation de signaux oscillants, qui est relié à un circuit de mesure 10. Selon ce nouveau concept de détection, ce réseau d'électrodes 2 sous forme matricielle, n'est plus constitué d'un ensemble de points de mesure discrets, mais plutôt comme une matrice discrète ou continue où seuls plusieurs points distincts sont mesurés. Ce réseau d'électrodes est sous la forme d'un damier avec les électrodes 2 bien regroupées et finement espacées l'une de l'autre.

Au lieu de mesurer une valeur de capacité locale pour déterminer une position, le nouveau réseau d'électrodes 2 lié au circuit de mesure 10 fonctionne avec la mesure globale des propriétés de transmission par rapport à un ensemble de trajets possibles. La présence du doigt comme objet affecte les propriétés locales du milieu de propagation, en induisant certaines modifications des propriétés du signal oscillant reçu sur les diverses sorties.

Le réseau d'électrodes 2 comprend donc une majeure partie des électrodes 2 capacitives, qui sont de type flottantes, c'est-à-dire sans être reliées par des pistes conductrices au circuit de mesure 10 ou aux électrodes voisines. Uniquement certaines électrodes normalement celles en périphérie de la matrice d'électrodes sont utilisées pour recevoir un ou plusieurs signaux oscillants d'entrée Srn, Srn+1 et pour fournir un ou plusieurs signaux de mesure en sortie Soutn pour déterminer la position d'un objet placé sur le réseau d'électrodes par le circuit de mesure 10. Uniquement des pistes de connexion aux électrodes 2 utilisées de mesure sont reliées au circuit de mesure 10.

Comme représenté dans cette forme d'exécution de la figure 2, les différentes excitations et mesures peuvent être permutées aux différents accès d'entrée et de sortie. A un instant donné, il est prévu deux signaux oscillants d'excitation d'entrée Srn et Srn+1 fournis chacun à une électrode 2 respective en étant suffisamment espacées l'une de l'autre. Ces deux électrodes 2 se trouvent en périphérie de la première partie du milieu de propagation des signaux oscillants. De préférence, il est prévu un premier signal oscillant d'excitation Srn, qui est un signal à large bande analogique, et un second signal oscillant d'excitation Srn+1, qui est un signal orthogonal analogique. Il est donc regardé comment se propagent le ou les signaux d'entrée dans le milieu de transfert jusqu'aux sorties du réseau d'électrodes capacitives, mais ici jusqu'à une électrode 2 de sortie pour fournir le signal de mesure Soutn. Cette électrode de sortie 2 se trouve dans la seconde partie du milieu de propagation et de préférence bien distante des deux électrodes d'entrée pour pouvoir couvrir une partie importante de la zone de détection de la surface de mesure du dispositif électronique 1. Le triangle reliant les électrodes 2 de signaux d'entrée Srn, Srn+1 et de sortie Soutn couvre une partie de la zone de détection. Le circuit de mesure 10 doit être en charge de détecter d'une part la présence d'au moins un objet sur ou à proximité de la surface de mesure et également de déterminer une position de l'objet sur le réseau d'électrodes.

Il a été donné volontairement la référence Srn au lieu de Sr1 et la référence Srn+1 au lieu de Sr2 pour les signaux d'excitation, car il peut être envisagé un plus grand nombre de signaux d'excitation. Il en est de même pour la référence du signal de mesure de sortie Soutn au lieu de Sout, car il peut être envisagé un plus grand nombre de signaux mesure de sortie.

Le circuit de mesure 10 comprend essentiellement pour la fourniture des signaux d'excitation Srn et Srn+1 et la réception du ou des signaux de sortie Soutn, un dispositif de mesure et d'excitation 11. Le circuit de mesure 10 comprend encore un réseau de neurones 13 recevant les signaux de mesure successifs du dispositif de mesure et d'excitation 11 pour déterminer des positions X et Y d'un objet sur la surface de mesure. Cependant il est effectué au préalable pour le dispositif de mesure 1 une phase initiale d'apprentissage de positions d'un objet sur la surface de mesure. Pour ce faire, le circuit de mesure 10 comprend un contrôleur de communication 12 pour communiquer par des signaux de données Scom1 sans fil ou par des signaux de données Scom2 de connexion directe à une machine d'apprentissage 16.

Comme expliqué ci-après, la détermination de la position exacte de l'objet, par exemple un doigt, sur le réseau d'électrodes 2 est effectuée par entraînement d'un réseau de neurones par la machine informatique 16 pour définir des positions en X et Y du réseau sur lequel se trouve le doigt. Par la suite, la position exacte du doigt est ensuite déterminée par le réseau de neurones 13 contenu dans le circuit de mesure 10, en réponse à plusieurs signaux de mesure Sout numérisés avec les variations de chaque signal de sortie pris en compte selon la position sur le réseau d'un doigt. Les différentes valeurs en X et Y des différentes positions sur la surface de mesure déterminées par la machine d'apprentissage 16 sont transmises et mémorisées dans une mémoire 14 du circuit de mesure 10. Cette mémoire 14 peut être une mémoire de type FLASH, qui fournit lors de la détermination de position du réseau de neurones 13, des poids synaptiques en liaison aux valeurs en X et Y transmises par la machine d'apprentissage 16.

Il est à noter que le dispositif électronique 1 peut aussi être en mesure de donner une valeur de sortie supplémentaire, qui représente par exemple l'angle d'inclinaison du doigt sur la matrice du réseau d'électrodes. De plus, il est prévu également de pouvoir déterminer dans le temps, le mouvement du doigt D sur la surface de mesure du dispositif électronique 1 pour réaliser une signature ou des caractères alphabétiques comme expliqué ci-après en fin de description. Dans ce cas de figure et après la phase d'apprentissage, le temps doit être tenu compte pour déterminer un tracé sur la surface de mesure dans le dispositif électronique 1. Ainsi en plus des différentes valeurs en X et Y des positions de l'objet sur la surface de mesure transmises par la machine d'apprentissage et mémorisées dans une mémoire du dispositif électronique 1, une valeur de temps ou période du mouvement du doigt sur la surface de mesure doit être apprise par le dispositif électronique 1. Le dispositif peut comprendre une base de temps ou un oscillateur de cadencement des opérations.

Le dispositif électronique 1 est prévu par exemple pour équiper une montre, telle qu'une montre-bracelet électronique ou électromécanique, et le réseau d'électrodes 2 peut être disposé sous un écran protecteur non conducteur, non représenté, dont la surface supérieure sert de surface de mesure du dispositif électronique 1. De préférence, le réseau d'électrodes 2 transparentes sur verre (réalisées par exemple par diffusion Indium Tin Oxyde) peut être disposé directement sous un verre de montre ou aussi sous un écran de protection transparent de faible épaisseur monté sur le verre de montre comme indiqué dans le brevet EP 2 988 180 B1.

Sur la figure 2, le dispositif électronique 1 peut comprendre encore dans le circuit de mesure 10 un contrôleur de communication 12 de signaux de données Scom1 ou Scom2. Ce contrôleur 12 peut être utilisé pour permettre d'effectuer des phases d'apprentissage propres à un utilisateur donné (par exemple de signature personnalisée) au travers de cette connexion simplifiée à une unité de calcul externe (par exemple un téléphone portable "smart-phone" ou une tablette). Une communication filaire Scom2 peut également être établie avec une machine d'apprentissage industrielle lors de la phase d'apprentissage initiale effectuée lors de la production du produit. 16 ("Machine learning" en terminologie anglaise).

Ainsi, il doit y avoir cette phase initiale d'apprentissage pour le dispositif électronique 1 en utilisant le principe de "Machine Learning", c'est-à-dire la détermination de position selon des mesures des signaux oscillants à travers le milieu 2 de propagation faite par une machine informatique, qui utilise un algorithme de non régression. Des valeurs numériques de mesure du dispositif électronique 1 sont donc transmises à la machine informatique 16. Plusieurs valeurs numériques distinctes sont normalement transmises pour différentes positions d'un objet sur la surface de mesure.

La phase d'initialisation est avantageusement déportée hors du dispositif 10, dans une machine informatique puissante. La consommation du circuit de mesure peut ainsi être réduite à la simple consommation du réseau de neurones, les différents poids synaptiques étant définis lors de la phase d'apprentissage, puis stockés dans une mémoire non volatile du circuit de mesure 10. Le circuit de mesure 10 se comporte ainsi comme un filtre paramétrable pour n'importe quelle géométrie de la matrice d'électrodes flottantes (ou du milieu de propagation dans le cas d'une alternative sans électrodes). La détermination de la position exacte de l'objet, par exemple un doigt, sur le réseau d'électrodes 2 est effectuée par entraînement du réseau de neurones par la machine informatique pour définir des positions en X et Y du réseau sur lequel se trouve le doigt. La position exacte du doigt est ensuite déterminée par le réseau de neurones contenu dans le circuit de mesure 10, en réponse à plusieurs signaux de mesure Sout numérisés avec les variations de chaque signal de sortie pris en compte selon la position sur le réseau d'un doigt.

Il est à noter que la machine informatique peut simplement être un téléphone portable 16 comme représenté avec communication sans fil de signaux Scom avec le dispositif électronique 1 de la montre connectée à glace tactile. Une communication par exemple en champ proche peut être établie entre le dispositif électronique 1 et le téléphone portable 16.

Au terme de la phase d'apprentissage, les données, telles que paramètres et poids synaptiques du réseau de neurones sont mémorisées dans la mémoire du circuit 10 du dispositif électronique 1. Une fois paramétré avec les poids synaptiques déterminés lors de la phase d'apprentissage, le dispositif électronique 1 peut facilement déterminer la position de placement d'un doigt sur le réseau d'électrodes 2 en regard de l'allure de chaque signal de sortie Sout. Une simplification du calcul de position est ainsi obtenue dans le circuit de mesure 10 en déterminant après la phase d'apprentissage la position sans grande consommation.

Il est encore à noter que dans le cas concret d'un dispositif tactile capacitif, l'invention propose de créer un milieu propice à la propagation de signaux électriques oscillants et en adéquation avec les critères ci-dessus en juxtaposant des électrodes 2 conductrices à faible espace entre chaque électrode, et isolées dans le réseau d'électrodes. Toutes les électrodes définissent une zone de détection de la surface de mesure. De cette manière, le signal oscillant peut se propager d'une électrode 2 conductrice à ses voisines par l'effet de condensateur de frange. La présence d'un objet tel qu'un doigt au-dessus de la surface de mesure, à une distance faible (typiquement l'épaisseur d'un écran de protection non conducteur recouvrant les électrodes), exerce sur ce réseau d'électrodes 2 un effet combiné d'atténuation (par couplage à la masse) et de renforcement (par augmentation de la permittivité de la capacité de frange), qui influence la fonction de transfert des signaux oscillants entre les différents points de mesure et d'injection, et ce de façon variable selon la position du doigt.

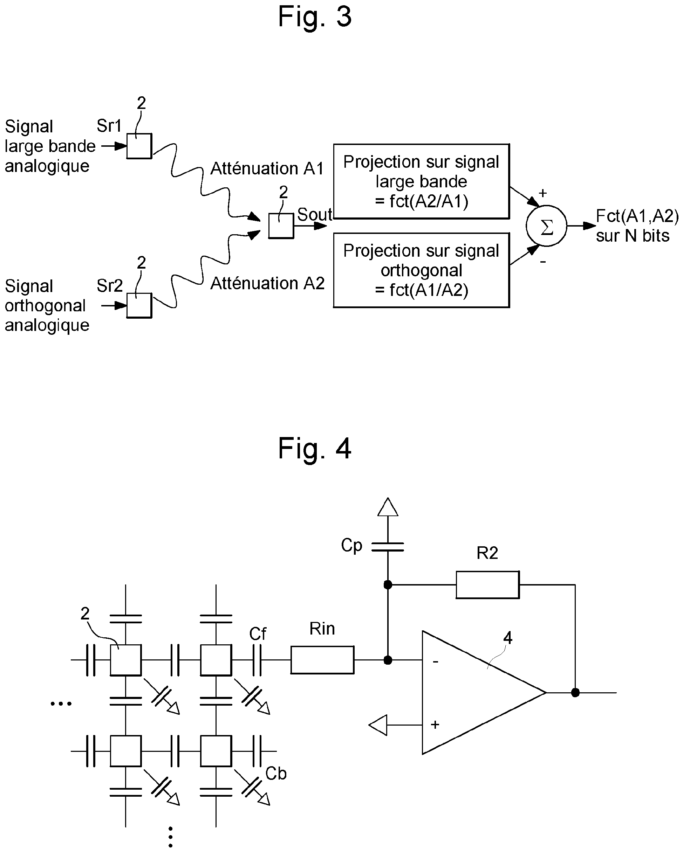

La figure 3 représente une forme particulière de propagation de deux signaux d'entrée orthogonaux Sr1 et Sr2 pour le procédé, qui sont mesurés à un point de sortie Sout dans le milieu de propagation. Ce principe de mesure se différencie de ce qui a été décrit en référence à la figure 1 du procédé de détection de présence et/ou de détermination de position d'au moins un objet sur ou à proximité d'une surface donnée de mesure du dispositif électronique, car il est cherché d'obtenir une certaine robustesse contre les variations de bruit naturel. Il y a donc un premier signal d'excitation Sr1, qui est un signal à large bande analogique, fourni à une première électrode 2 du réseau et une perturbation fournie par une seconde électrode 2 du réseau, espacée de la première électrode. Ce signal de perturbation Sr2 est choisi pour être orthogonal au signal d'excitation Sr1. Ce faisant, il est alors possible de définir un rapport signal sur perturbation beaucoup plus constant et défini par rapport à la variation du bruit naturel, lorsque le rapport signal sur bruit (RSB) global est suffisamment supérieur à la limite du dispositif électronique. Comme présenté à la figure 3, il y a une modification du rapport signal sur perturbation par rapport à l'emplacement du point de mesure.

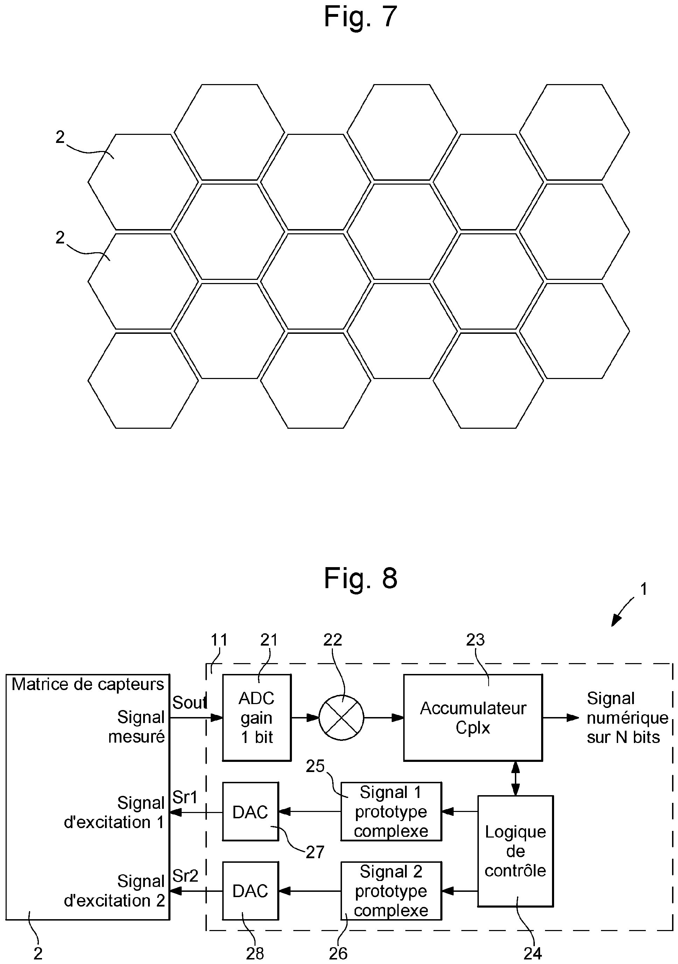

Comme il sera expliqué ci-après à la figure 8, le signal de sortie de mesure Sout est converti en numérique par un convertisseur ADC. Ensuite, il est opéré une projection sur le signal large bande pour donner la fonction de transfert fct(A2/A1) où A1 est l'atténuation du signal d'excitation Sr1 et A2 est l'atténuation du signal orthogonal Sr2 au point de mesure. Une influence d'un doigt posé dans une zone de détection peut être déterminée entre l'entrée Sr1 et la sortie Sout. Il est aussi opéré une projection sur le signal orthogonal pour donner la fonction de transfert fct(A1/A2). Par la suite, il est effectué une soustraction des deux fonctions fct(A2/A1) et fct(A1/A2) pour donner un signal de mesure numérique de sortie du circuit de mesure Fct(A1, A2), qui est sur N bits et peut être transmis à la machine d'apprentissage dans une phase initiale d'apprentissage comme précédemment décrit.

La figure 4 représente juste un modèle équivalent simple d'un réseau d'électrodes 2 de capteurs capacitifs sous forme matricielle et qui définit le milieu de propagation avec une structure d'amplificateur de mesure 4 relié en sortie du réseau. Une résistance d'entrée Rin est connectée depuis le réseau à une borne négative de l'amplificateur 4, alors que son entrée positive est liée à la masse. Une résistance de mesure R2 relie la borne négative de l'amplificateur 4 et sa sortie. Un condensateur parasite Cp lié à la masse subsiste au noeud de connexion entre la résistance d'entrée Rin et la résistance de mesure R2.

Le réseau d'électrodes 2 dites flottantes Cf, c'est-à-dire non connectées, peut être approché en simulation avec un réseau d'inter-condensateurs agencés en forme de peigne (frange) avec une matrice de condensateurs à la masse Cb. Lorsque ce modèle simple est complété avec la position d'un doigt, deux paramètres principaux sont impactés. D'une part, l'électrode touchée ou approchée par le doigt obtient une plus grande valeur capacitive à la masse, et d'autre part, les électrodes à proximité directe du doigt obtiennent une plus grande valeur inter-capacitive, en raison de la haute valeur Epsilon des tissus des doigts (eau, Epsilon = 80).

La résistance équivalente à la masse du modèle doigt est estimée dans la gamme de Mega Ohms, mais la situation réelle est probablement plus complexe. Cependant, les deux effets énumérés ci-dessous obtiennent un effet complémentaire à savoir l'augmentation de la valeur capacitive à la masse réduit le couplage de la source au point de mesure et l'augmentation des condensateurs marginaux couple plus de signal de la source au point de mesure.

Un grand nombre de paramètres caractérise la structure du réseau utilisé. Il doit être tenu compte du nombre d'électrodes au moins plus grand que 9 électrodes, par exemple 16, 20, 50, 100 ou plus électrodes, de leur forme et taille inférieure à 1 mm, de la distance les séparant par exemple 50 µm ou 35 µm ou encore inférieure, de la distance à un plan de masse donné. En outre, il apparaît rapidement que le condensateur d'entrée de la structure de détection ou préamplificateur réduit le niveau du signal. Ceci est simplement dû à la structure de diviseur capacitif entre les dents des électrodes en forme de peigne et la valeur capacitive de mesure à la masse. Pour cette raison, une structure d'amplificateur 4 inversé est utilisé.

Cette structure de la figure 4 présente certains avantages par rapport à une autre approche possible, qui sont énumérés ci-après :
- Le réseau à haute impédance « voit » une résistance, qui obtient une très faible valeur capacitive parasite à la masse, en particulier lorsque les composants discrets sont utilisés pour construire l'amplificateur de détection d'entrée.
- La structure intégrée correspondante permet de réduire les protections ESD et même les supprimer sur l'électrode d'entrée.
- La structure globale obtient une fonction passe-haut.
- En raison de l'impédance très élevée du réseau (seul le condensateur marginal en parallèle avec le condensateur de mise à la masse), la même électrode d'entrée peut devenir l'électrode d'excitation, en envoyant le signal d'excitation derrière la résistance série.

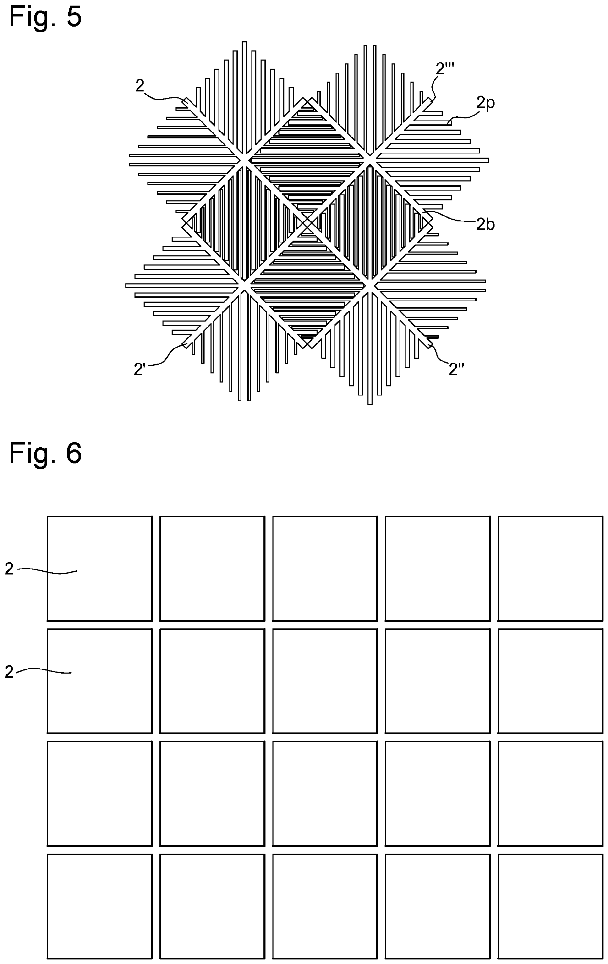

A ce titre, il est à noter que plusieurs structures de réseau d'électrodes sous forme matricielle ont été testées. Il peut être envisagé de réaliser le réseau d'électrodes comme représenté aux figures 5, 6 et 7.

La figure 5 représente une première forme d'exécution d'un réseau d'électrodes de capteurs capacitifs comme milieu de propagation, pour lequel chaque électrode est d'une structure en forme de peigne pour s'imbriquer en partie avec chaque électrode voisine. Il est donc montré uniquement quatre électrodes 2, 2', 2", 2‴, qui comprennent chacune une base 2b en forme de X ou de croix, et des dents 2p partant de la base en forme de X et dimensionnées pour former quatre petits carrés depuis chaque branche de la base 2b. Les quatre petits carrés de dents 2p avec la base 2b forment chaque électrode de forme carrée. Les dents de chaque petit carré par électrode s'imbriquent avec les dents d'un autre petit carré d'une électrode voisine.

Bien entendu, plus de quatre électrodes sont nécessaires en réalité pour réaliser le réseau d'électrodes. Ce réseau d'électrodes à une faible valeur capacitive de frange conduit à la dynamique de variation de signal la plus élevée par rapport à la position d'un doigt sur le réseau. Ceci est simplement dû au fait que la valeur capacitive doigt-masse domine dans la plage de fréquence observée. De plus, l'effet de mise à la masse du doigt (dans une plage de 1 pF) devient beaucoup plus important lorsque la frange d'accouplement est réduite.

La figure 6 représente une seconde forme d'exécution du réseau d'électrodes capacitives. Dans ce cas de figure, le réseau d'électrodes est réalisé par un ensemble d'électrodes 2 de forme carrée sous forme matricielle. Bien entendu, il est cherché de réduire l'espace entre chaque électrode voisine pour définir le réseau d'électrodes 2 du dispositif électronique.

La figure 7 représente une troisième forme d'exécution du réseau d'électrodes capacitives. Dans ce cas de figure, le réseau d'électrodes est réalisé par un ensemble d'électrodes 2 de forme hexagonale et réparties sous forme de nid d'abeilles. Bien entendu, il est cherché de réduire l'espace entre chaque électrode voisine pour définir le réseau d'électrodes 2 du dispositif électronique.

La figure 8 représente une forme d'exécution du dispositif électronique 1 avec le réseau d'électrodes 2 (matrice de capteurs capacitifs) et le circuit de mesure 10 prévu en partie pour la mesure des signaux oscillants décrits ci-dessus en référence aux figures 2 et 3. Le réseau d'électrodes 2 reçoit un premier signal d'excitation Sr1 et un second signal orthogonal Sr2 fournis chacun à une électrode 2 respective. Le réseau d'électrodes 2 fournit un signal de sortie de mesure Sout sur la base de variation des signaux oscillants en fonction d'un objet ou doigt placé sur la surface de mesure comme expliqué précédemment.

Dans le circuit de mesure 10, le signal de sortie Sout est converti en numérique dans un convertisseur analogique-numérique 21 à gain sur 1 bit par exemple. Il est cherché avec le traitement numérique des signaux d'obtenir la dissipation de puissance la plus faible possible pendant la mesure, et de garder le convertisseur analogique-numérique 21 aussi simple que possible.

Suite à la conversion en numérique du signal de sortie Sout, il est effectué une projection du signal par l'intermédiaire d'un opérateur de projection complexe 22, qui reçoit un signal numérique d'une unité 25 du prototype de signal d'excitation du premier signal d'excitation Sr1 en numérique. Cette approche de projection simple correspond en effet à un simple filtrage en bande passante, lorsque le signal d'excitation a une fréquence constante. Cependant l'utilisation d'une fréquence constante n'est pas recommandée, car une perturbation ayant une fréquence similaire au signal d'excitation peut corrompre la mesure. Pour cette raison, la fréquence du signal est balayée pendant la mesure, ce qui permet de se débarrasser du problème de perturbation potentielle fixe.

Dans le circuit de mesure 10, le concept de projection se fait à la volée et ne nécessite aucun signal mémoire d'acquisition, et qu'une simple structure multiplicatrice suivie d'un intégrateur est suffisante pour fournir le résultat de la projection. Afin d'obtenir une bonne robustesse contre la variation de phase, une projection de signal complexe par l'opérateur de projection complexe 22 est utilisée. La sortie de cet opérateur de projection complexe 22 est reçue par un accumulateur de phase Cplx 23 (intégrateur), produisant les parties réelle et imaginaire du signal de projection numérique.

C'est chaque signal numérique sur N bits en sortie de l'accumulateur 23 qui est transmis successivement à une machine d'apprentissage lors de la phase initiale d'apprentissage du dispositif électronique 1.

L'accumulateur 23 est relié aussi à une unité logique de contrôle 24, qui peut être un processeur ou plutôt un microcontrôleur dans lequel une mémoire peut aussi être prévue pour mémoriser tous les paramètres de configuration (poids synaptiques) suite à la phase initiale d'apprentissage par exemple. Toutes les valeurs complexes des signaux de sortie numérisés du circuit de mesure servent à la phase d'apprentissage conjointement aux positions XY associées et sont archivées sur un disque dur externe d'une base de données (afin de préparer la phase d'apprentissage).

L'unité logique de contrôle 24 comprend un générateur de phase. Cette phase permet la génération des signaux d'excitation et de projection.

L'unité logique de contrôle 24 envoie le signal de phase à une unité 25 du prototype de signal d'excitation du premier signal d'excitation Sr1 en numérique et une unité 26 du prototype de signal d'excitation du second signal d'excitation Sr2 en numérique orthogonal au premier signal Sr1. La sortie de l'unité 25 du prototype de signal d'excitation du premier signal d'excitation Sr1 est convertie dans un premier convertisseur numérique-analogique DAC 27 pour fournir un premier signal oscillant d'excitation Sr1 au réseau d'électrodes 2. La sortie de l'unité 26 du prototype de signal d'excitation du second signal d'excitation Sr2 est convertie dans un second convertisseur numérique-analogique DAC 28 pour fournir un second signal oscillant orthogonal Sr2 au réseau d'électrodes 2.

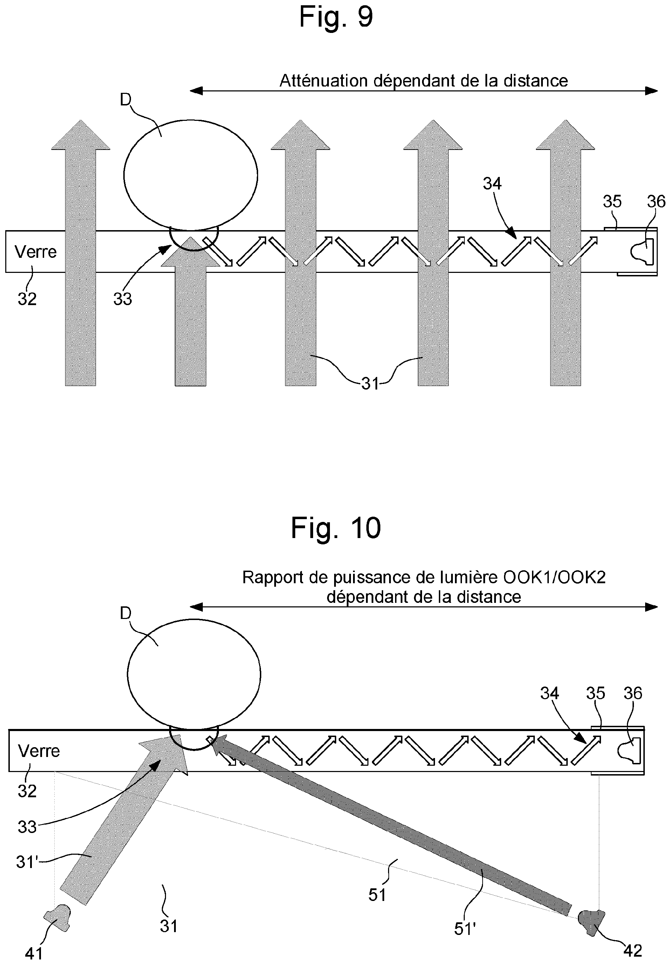

A titre de variante à un réseau d'électrodes comme milieu de propagation, il est montré aux figures 9 à 11, trois formes d'exécution représentant en partie un dispositif électronique pour la détermination d'au moins une position d'un objet sur une surface de mesure où le milieu de propagation est adapté à la transmission de signaux lumineux (signaux optiques). Le milieu de propagation est un verre 32 d'un instrument portable, tel que par exemple un verre de montre. Pour la détermination de position d'un objet, tel qu'un doigt D sur une surface de mesure, il est utilisé le principe de réflexion interne totale atténuée en optique (FTIR ou "Frustrated Total Internal Reflection" en terminologie anglaise). Cette propriété optique intéressante est généralement utilisée pour couper en interne la lumière réfléchie totalement dans une direction orthogonale. Le scénario inverse permet de coupler quelques lumières orthogonales dans le verre pour avoir une réflexion interne totale atténuée.

Le dispositif électronique comprend encore une ou plusieurs sources de lumière 41, 42 pour la fourniture de faisceaux de lumière 31, 51 dirigés vers une surface inférieure du verre 32 opposée à la surface supérieure de mesure sur laquelle est placé un doigt D, dont la position est à déterminer. Une fois que le doigt D touche la surface de mesure, il y a une zone de couplage d'ondes évanescentes des faisceaux de lumière en direction du doigt. Suite à cela, une onde lumineuse 34 est réfléchie entre la surface inférieure et la surface supérieure du verre 32 pour être captée par un photo-détecteur 36, qui peut être une photodiode, à une extrémité ou bordure du verre. Un ou deux écrans de lumière 35 fixés sur les surfaces inférieure et/ou supérieure du verre 32 sont prévus au-dessus et au-dessous de la photodiode 36.

Selon la première forme d'exécution de la figure 9, plusieurs faisceaux de lumière 31 sont générés par une ou plusieurs premières sources de lumière non représentées. Ces faisceaux de lumière 31 sont dirigés perpendiculairement à la surface inférieure et à la surface supérieure. En fonction de la position du doigt D sur la surface de mesure, il y a une atténuation du signal capté par la photodiode, qui dépend de la distance entre le doigt D et la photodiode 36. Toutes les opérations d'apprentissage de position expliquées en référence aux figures 1 et 2 notamment s'appliquent à cette variante optique du dispositif électronique.

Selon la seconde forme d'exécution de la figure 10, il est prévu deux diodes lumineuses 41, 42, qui peuvent être des diodes infrarouges. Les deux sources infrarouges sont modulées et utilisées pour illuminer le verre 32 avec un gradient de puissance donné. La première diode infrarouge 41 fournit un premier rayonnement lumineux 31 et est inclinée d'un angle défini par rapport à une perpendiculaire aux surfaces, et il en est de même pour la seconde diode infrarouge 42, qui fournit un second rayonnement lumineux 51. Le premier faisceau 31' OOK1 arrivant en direction du doigt D est incliné différemment du second faisceau lumineux 51' OOK2. En bougeant le doigt sur l'axe X cela couplera plus ou moins le premier signal par rapport au second signal à la photodiode 36, qui détecte. Ainsi, il est déterminé le rapport de puissance de lumière OOK1/OOK2 dépendant de la distance.

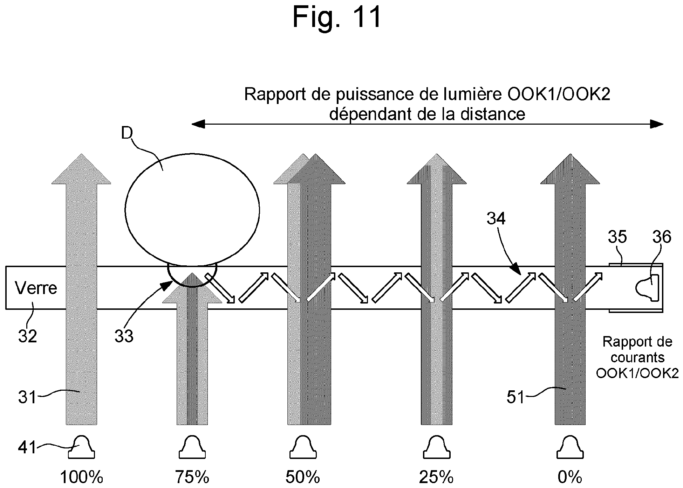

Finalement selon la troisième forme d'exécution de la figure 11, deux sources infrarouges modulées sont utilisées pour illuminer le verre 32 avec un gradient de puissance donné selon le premier faisceau de lumière 31 OOK1, et le second faisceau de lumière 51 OOK2. En bougeant le doigt D sur l'axe X cela couplera plus ou moins le premier signal par rapport au second signal à la photodiode, qui détecte. Des pourcentages d'illumination ou gradient de puissance de chaque diode infrarouge sont indiqués notamment pour la première diode infrarouge 41 (rapport de courants OOK1/OOK2). Ainsi, il est déterminé le rapport de puissance de lumière OOK1/OOK2 dépendant de la distance.

Chaque dispositif électronique pour la détermination d'au moins une position d'un objet sur une surface de mesure avec un milieu de propagation de transmission de signaux lumineux, comprend un circuit de mesure recevant un signal de sortie de la photodiode 36 et commandant la ou les diodes lumineuses 41 42. Pour ces trois formes d'exécution, il est effectué une même phase initiale d'apprentissage de différentes positions de l'objet D sur la surface de mesure, que ce qui a été décrit précédemment en référence aux figures 1 et 2.

Comme indiqué précédemment, la détermination de position par exemple d'un doigt, posé sur la surface de mesure du dispositif électronique 1, peut servir à la commande de fonctions si le dispositif électronique 1 est monté dans une montre électronique ou électromécanique. Il peut aussi être envisagé d'utiliser le dispositif électronique pour la reconnaissance d'une signature par un objet (stylet) ou un doigt d'une personne, ou la reconnaissance de caractères dessinés sur la surface de mesure et retrouvés dans une bibliothèque de caractères. A ce titre, il doit y avoir aussi une phase d'apprentissage pour une signature ou reconnaissance de caractères sur la surface de mesure par une machine informatique en liaison au dispositif électronique pour déterminer les positions X et Y et aussi le temps (paramètre important pour la signature). Toutes ces données sont transmises et mémorisées dans le dispositif électronique 1. Cela permet dans une fenêtre temporelle déterminée d'effectuer un mouvement sur la surface de mesure avec un stylet ou un doigt pour que le dispositif électronique 1 détermine facilement une fois configuré, la signature ou tout caractère dessiné.

A partir de la description qui vient d'être faite, plusieurs variantes de réalisation du procédé de détection de présence et/ou de détermination de position d'au moins un objet sur une surface de mesure d'un dispositif électronique peuvent être conçues par l'homme du métier sans sortir du cadre de l'invention définie par les revendications.

## Revendications

1. Procédé de détection de présence et/ou de détermination d'au moins une position d'au moins un objet (D) sur ou à proximité d'une surface de mesure d'un dispositif électronique (1), qui comprend un milieu (2) de propagation de signaux oscillants et un circuit de mesure (10), pour lequel le dispositif électronique (1) comprend comme milieu de propagation, un réseau d'électrodes (2) de capteurs capacitifs, qui comprend plusieurs électrodes (2) disposées à proximité l'une de l'autre sous forme matricielle, une majeure partie des électrodes (2) capacitives étant flottantes, c'est-à-dire sans être reliées par des pistes conductrices au circuit de mesure (10) ou aux électrodes voisines, alors que certaines électrodes (2) en périphérie sont reliées par pistes conductrices au circuit de mesure (10), le procédé comprenant les étapes de :
- fournir au moins deux signaux oscillants (Sr1, Sr2) en entrée chacun à une électrode (2) d'entrée respective en périphérie d'une première partie du réseau d'électrodes, les deux électrodes (2) recevant les signaux oscillants en entrée, étant espacées l'une de l'autre,
- recevoir, par les au moins deux signaux oscillants (Sout) ayant transité dans le milieu (2) de propagation, qui définit une fonction de transfert des signaux oscillants, au moins un signal de mesure en sortie (Sout) par une électrode de sortie en périphérie d'une seconde partie du réseau d'électrodes, les électrodes d'entrée et l'électrode de sortie étant disposées pour couvrir toute une zone de détection de la surface de mesure,
- effectuer, dans le circuit de mesure (10), une mesure d'un couplage ou d'une atténuation induite par la présence sur les au moins deux signaux oscillants transitant dans le milieu de propagation d'un objet (D) posé sur ou à proximité de la surface de mesure, de telle manière à déterminer la position de l'objet (D) dans la zone de détection de la surface de mesure dépendant de la modification de la fonction de transfert du milieu.

2. Procédé selon la revendication 1, pour lequel le dispositif électronique (1) est intégré dans un instrument portable, tel que par exemple une montre électronique ou électromécanique, **caractérisé en ce qu'**une phase initiale d'apprentissage de différentes positions de l'objet (D) sur ou à proximité de la surface de mesure est effectuée par une machine ou un appareil d'apprentissage (16) en communication avec le dispositif électronique (1), qui transmet différentes mesures relatives aux différentes positions de l'objet (D) sur ou à proximité de la surface de mesure, **en ce qu'**au terme de la phase d'apprentissage, la détermination des positions exactes en X et Y de l'objet (D) sur ou à proximité de la surface de mesure est effectuée par la machine d'apprentissage (16) pour définir des positions en X et Y des différentes positions de l'objet (D) sur ou à proximité de la surface de mesure, fonction des signaux oscillants mesurés dans le circuit de mesure (10), et **en ce que** les différentes valeurs en X et Y des différentes positions sur la surface de mesure sont transmises et mémorisées dans une mémoire (14) du circuit de mesure (10) du dispositif électronique (1) pour paramétrer et configurer le dispositif électronique (1) pour lui faciliter la détermination subséquente de position de tout objet (D) posé sur ou à proximité de la surface de mesure.

3. Procédé selon la revendication 2, **caractérisé en ce que** dans un premier temps, le dispositif électronique (1) communique les différentes mesures de l'objet (D) sur ou à proximité de la surface de mesure à la machine d'apprentissage (16), qui comprend un réseau de neurones à entraîner.

4. Procédé selon l'une des revendications 2 et 3, **caractérisé en ce que** les différentes mesures relatives aux différentes positions de l'objet (D) sur ou à proximité de la surface de mesure sont fournies à un réseau de neurones dans le circuit de mesure (10), qui est paramétré avec des poids synaptiques déterminés par la machine d'apprentissage (16) utilisée lors de la phase d'apprentissage.

5. Procédé selon la revendication 2, **caractérisé en ce que**, dans une phase subséquente éventuelle, la machine d'apprentissage peut être un téléphone portable (16) avec un programme guidant l'utilisateur sur les différents motifs à effectuer sur la surface de mesure, et adapté pour effectuer une communication sans fil de signaux de données (Scom) avec le dispositif électronique (1), plusieurs signaux de mesure numérisés successifs de plusieurs positions d'un objet (D) sur la surface de mesure étant transmis au téléphone portable (16) par une communication en champ proche pour la détermination des valeurs de position en X et Y transmises par le téléphone portable (16) au dispositif électronique (1) à configurer.

6. Procédé selon la revendication 2, **caractérisé en ce que** dans la phase initiale d'apprentissage, il est déterminé dans les signaux de mesure transmis par le dispositif électronique (1) tout mouvement d'un objet (D), tel qu'un stylet ou un doigt d'une personne sur la surface de mesure dans le but d'effectuer une signature dans une fenêtre temporelle définie ou pour la reconnaissance de caractères dessinés sur la surface de mesure, et **en ce que** la machine d'apprentissage (16) transmet suite à cette phase d'apprentissage tous les paramètres de configuration, qui sont des poids synaptiques au dispositif électronique (1) relatifs aux différentes valeurs en X et Y des différentes positions et la composante de temps pour la reconnaissance d'une signature ou de caractères dessinés.

7. Procédé selon la revendication 1, **caractérisé en ce qu'**un premier signal oscillant à large bande analogique (Sr1) est fourni à une première électrode d'entrée et **en ce qu'**un second signal oscillant orthogonal analogique (Sr2) est fourni à une seconde électrode distante de la première électrode sur la première partie du milieu de propagation.

8. Procédé selon la revendication 7, **caractérisé en ce qu'**il est opéré une projection sur le signal large bande dans le circuit de mesure (10) pour donner la fonction de transfert fct(A2/A1) où A1 est l'atténuation du premier signal d'excitation (Sr1) et A2 est l'atténuation du second signal orthogonal (Sr2) au point de mesure, et **en ce qu'**une influence d'un objet (D) posé dans une zone de détection peut être déterminée entre la première électrode recevant le premier signal d'excitation (Sr1) et l'électrode de sortie recevant le signal de mesure en sortie (Sout), **en ce qu'**il est aussi opéré une projection sur le signal orthogonal (Sr2) pour donner la fonction de transfert fct(A1/A2), et **en ce qu'**il est effectué une soustraction des deux fonctions fct(A2/A1) et fct(A1/A2) pour donner un signal de mesure numérique de sortie du circuit de mesure(10) Fct(A1, A2), qui est sur N bits.

9. Dispositif électronique (1) configuré pour mettre en oeuvre le procédé de l'une des revendications précédentes pour la détection de présence et/ou la détermination d'au moins une position d'au moins un objet (D) sur ou à proximité d'une surface de mesure du dispositif électronique (1), le dispositif comprenant un circuit de mesure (10) relié au milieu (2) de propagation des signaux oscillants.

10. Dispositif électronique (1) selon la revendication 9, **caractérisé en ce que** le milieu de propagation est un réseau d'électrodes (2) de capteurs capacitifs, qui comprend plusieurs électrodes (2) disposées à proximité l'une de l'autre sous forme matricielle, une majeure partie des électrodes (2) capacitives étant flottantes, c'est-à-dire sans être reliées par des pistes conductrices au circuit de mesure (10) ou aux électrodes voisines, alors que certaines électrodes (2) en périphérie sont reliées par pistes conductrices au circuit de mesure (10), **caractérisé en ce que** deux électrodes (2) d'entrée en périphérie de la première partie du réseau d'électrodes sont adaptées à recevoir respectivement chacune un de deux signaux oscillants (Sr1, Sr2), les deux électrodes (2) d'entrée étant espacées l'une de l'autre, et **en ce qu'**une électrode (2) de sortie en périphérie de la seconde partie du réseau d'électrodes est adaptée à recevoir un signal de mesure en sortie (Sout), les électrodes d'entrée et l'électrode de sortie étant disposées pour couvrir toute une zone de détection de la surface de mesure pour déterminer la position d'un objet (D) sur la surface de mesure.

11. Dispositif électronique (1) selon la revendication 10, **caractérisé en ce que** le réseau d'électrodes (2) est constitué d'électrodes (2, 2', 2", 2‴) ayant une structure en forme de peigne pour s'imbriquer en partie avec chaque électrode voisine, **en ce que** chaque électrode (2, 2', 2", 2‴) comprend une base (2b) en forme de X, et des dents (2p) partant de la base en forme de X et dimensionnées pour former quatre petits carrés depuis chaque branche de la base (2b), et **en ce que** les quatre petits carrés de dents (2p) avec la base (2b) forment chaque électrode de forme carrée permettant aux dents (2p) de chaque petit carré par électrode de s'imbriquer avec les dents (2p) d'un autre petit carré d'une électrode voisine.

12. Dispositif électronique (1) selon la revendication 10, **caractérisé en ce que** le réseau d'électrodes (2) est constitué par un ensemble d'électrodes (2) de forme carrée sous forme matricielle avec un espace réduit entre chaque électrode.

13. Dispositif électronique (1) selon la revendication 10, **caractérisé en ce que** le réseau d'électrodes (2) est constitué par un ensemble d'électrodes (2) de forme hexagonale et réparties sous forme de nid d'abeilles avec un espace réduit entre chaque électrode.

14. Dispositif électronique (1) selon la revendication 10, **caractérisé en ce que** le réseau d'électrodes (2) est agencé pour recevoir un premier signal d'excitation (Sr1) par une première électrode et un second signal orthogonal (Sr2) par une seconde électrode espacée de la première électrode, et pour fournir un signal de sortie de mesure (Sout) à une électrode de sortie sur la base de variation des signaux oscillants en fonction d'un objet (D) placé sur la surface de mesure, **en ce qu'**un dispositif de mesure et d'excitation (11) du circuit de mesure (10) comprend un convertisseur analogique-numérique (21) pour convertir le signal de sortie (Sout) en numérique, **en ce que** le circuit de mesure (10) comprend un opérateur de projection complexe (22), qui reçoit un signal numérique d'une unité (25) du prototype de signal d'excitation du premier signal d'excitation (Sr1) en numérique pour effectuer une projection du signal de sortie (Sout) converti en numérique, **en ce que** le dispositif de mesure et d'excitation (11) comprend un accumulateur de phase Cplx (23) recevant le signal de sortie de l'opérateur de projection complexe (22), et qui prend en compte les parties réelle et imaginaire du signal de projection numérisé, et **en ce que** l'accumulateur de phase Cplx (23) fournit un signal numérique sur N bits de la mesure de sortie (Sout), qui est prévu pour être transmis pour chaque mesure de position à une machine d'apprentissage (16) lors de la phase initiale d'apprentissage du dispositif électronique (1).

15. Dispositif électronique (1) selon la revendication 14, **caractérisé en ce que** l'accumulateur (23) est relié à une unité logique de contrôle (24), qui peut comprendre un générateur de signaux dans le domaine numérique pour commander l'unité (25) du prototype de signal d'excitation du premier signal d'excitation (Sr1) en numérique et une unité (26) du prototype de signal d'excitation du second signal d'excitation (Sr2) en numérique orthogonal au premier signal (Sr1), **en ce que** la sortie de l'unité (25) du prototype de signal d'excitation du premier signal d'excitation (Sr1) est convertie dans un premier convertisseur numérique-analogique (27) pour fournir un premier signal oscillant d'excitation (Sr1) au réseau d'électrodes 2, et **en ce que** la sortie de l'unité (26) du prototype de signal d'excitation du second signal d'excitation (Sr2) est convertie dans un second convertisseur numérique-analogique (28) pour fournir un second signal oscillant orthogonal (Sr2) au réseau d'électrodes (2).

## Patentansprüche

1. Verfahren zum Erfassen des Vorhandenseins und/oder Bestimmen mindestens einer Position mindestens eines Objekts (D) auf oder in der Nähe einer Messfläche einer elektronischen Vorrichtung (1), die ein Ausbreitungsmedium (2) für oszillierende Signale und eine Messschaltung (10) umfasst, für die die elektronische Vorrichtung (1) als Ausbreitungsmedium eine Netz aus Elektroden (2) kapazitiver Sensoren umfasst, das mehrere Elektroden (2) umfasst, die in Matrixform nahe beieinander angeordnet sind, wobei ein großer Teil der kapazitiven Elektroden (2) schwebend ist, das heißt, sie sind nicht durch Leiterbahnen mit der Messschaltung (10) oder mit benachbarten Elektroden verbunden, während bestimmte Elektroden (2) in der Peripherie durch Leiterbahnen mit der Messschaltung (10) verbunden sind,
wobei das Verfahren die folgenden Schritte umfasst:
- Liefern von mindestens zwei oszillierenden Eingangssignalen (Sr1, Sr2) jeweils an eine entsprechende Eingangselektrode (2) in der Peripherie eines ersten Teils des Elektrodennetzes, wobei die zwei Elektroden (2), die die oszillierenden Eingangssignale empfangen, voneinander beabstandet sind,
- Empfangen, durch die mindestens zwei oszillierenden Signale (Sout), die das Ausbreitungsmedium (2) durchlaufen haben, das eine Übertragungsfunktion der oszillierenden Signale definiert, mindestens eines Ausgangsmesssignals (Sout) durch eine Ausgangselektrode in der Peripherie eines zweiten Teils des Elektrodennetztes, wobei die Eingangselektroden und die Ausgangselektrode so angeordnet sind, dass sie einen gesamten Erfassungsbereich der Messfläche abdecken,
- Durchführen, in der Messschaltung (10), einer Messung einer Kopplung oder Dämpfung, die durch das Vorhandensein eines Objekts (D) auf oder in der Nähe der Messfläche auf den mindestens zwei oszillierenden Signalen, die das Ausbreitungsmedium durchlaufen, derart induziert wird, dass die Position des Objekts (D) im Erfassungsbereich der Messfläche in Abhängigkeit von der Änderung der Übertragungsfunktion des Mediums bestimmt wird.

2. Verfahren nach Anspruch 1, bei dem die elektronische Vorrichtung (1) in ein tragbares Instrument, wie zum Beispiel eine elektronische oder elektromechanische Uhr, integriert ist, **dadurch gekennzeichnet, dass** eine anfängliche Lernphase verschiedener Positionen des Objekts (D) auf oder in der Nähe der Messfläche durch eine Lernmaschine oder -einrichtung (16) in Kommunikation mit der elektronischen Vorrichtung (1) durchgeführt wird, die verschiedene Messwerte bezüglich der verschiedenen Positionen des Objekts (D) auf oder in der Nähe der Messfläche übermittelt, dadurch, dass am Ende der Lernphase das Bestimmen der exakten Positionen in X und Y des Objekts (D) auf oder in der Nähe der Messfläche durch die Lernmaschine (16) durchgeführt wird, um Positionen in X und Y der unterschiedlichen Positionen des Objekts (D) auf oder in der Nähe der Messfläche in Abhängigkeit von den in der Messschaltung (10) gemessenen oszillierenden Signalen zu definieren, und dadurch, dass die unterschiedlichen Werte in X und Y der unterschiedlichen Positionen auf der Messfläche in einen Speicher (14) der Messschaltung (10) der elektronischen Vorrichtung (1) übertragen und gespeichert werden, um die elektronische Vorrichtung (1) zu parametrisieren und konfigurieren, um ihr das nachfolgende Bestimmen der Position eines beliebigen Objekts (D) zu erleichtern, das auf oder in der Nähe der Messfläche platziert ist.

3. Verfahren nach Anspruch 2, **dadurch gekennzeichnet, dass** die elektronische Vorrichtung (1) am Anfang die unterschiedlichen Messungen des Objekts (D) auf oder in der Nähe der Messfläche an die Lernmaschine (16) kommuniziert, die ein zu trainierendes neuronales Netz umfasst.

4. Verfahren nach einem der Ansprüche 2 und 3, **dadurch gekennzeichnet, dass** die verschiedenen Messungen bezüglich der verschiedenen Positionen des Objekts (D) auf oder in der Nähe der Messfläche an ein neuronales Netzwerk in der Messschaltung (10) geliefert werden, das mit synaptischen Gewichten parametrisiert ist, die von der während der Lernphase verwendeten Lernmaschine (16) bestimmt werden.

5. Verfahren nach Anspruch 2, **dadurch gekennzeichnet, dass** die Lernmaschine in einer möglichen nachfolgenden Phase ein Mobiltelefon (16) mit einem Programm sein kann, das den Benutzer zu den verschiedenen Mustern, die auf der Messfläche auszuführen sind, anleitet und angepasst ist, eine drahtlose Kommunikation von Datensignalen (Scom) mit der elektronischen Vorrichtung (1) durchzuführen, wobei mehrere aufeinanderfolgende digitalisierte Messsignale mehrerer Positionen eines Objekts (D) auf der Messfläche an das Mobiltelefon (16) durch eine Nahfeldkommunikation für das Bestimmen der vom Mobiltelefon (16) an die zu konfigurierende elektronische Vorrichtung (1) übermittelten Positionswerte in X und Y übermittelt werden.

6. Verfahren nach Anspruch 2, **dadurch gekennzeichnet, dass** in der anfänglichen Lernphase in den von der elektronischen Vorrichtung (1) übermittelten Messsignalen jede Bewegung eines Objekts (D), wie etwa eines Stifts oder eines Fingers einer Person, auf der Messfläche bestimmt wird, um eine Signatur innerhalb eines definierten Zeitfensters durchzuführen oder um auf der Messfläche gezeichnete Zeichen zu erkennen, und dadurch, dass die Lernmaschine (16) nach dieser Lernphase alle Konfigurationsparameter, die synaptische Gewichte sind, an die elektronische Vorrichtung (1) in Bezug auf die unterschiedlichen Werte in X und Y der unterschiedlichen Positionen und die Zeitkomponente für die Erkennung einer Unterschrift oder gezeichneter Zeichen übermittelt.

7. Verfahren nach Anspruch 1, **dadurch gekennzeichnet, dass** ein erstes analoges breitbandiges oszillierendes Signal (Sr1) an eine erste Eingangselektrode geliefert wird, und dadurch, dass ein zweites analoges orthogonales oszillierendes Signal (Sr2) an eine von der ersten Elektrode entfernte zweite Elektrode auf dem ersten Teil des Ausbreitungsmediums geliefert wird.

8. Verfahren nach Anspruch 7, **dadurch gekennzeichnet, dass** in der Messschaltung (10) eine Projektion auf das Breitbandsignal erfolgt, um die Übertragungsfunktion fct(A2/A1) zu ergeben, wobei A1 die Dämpfung des ersten Anregungssignals (Sr1) ist und A2 die Dämpfung des zweiten orthogonalen Signals (Sr2) am Messpunkt ist, und dadurch, dass ein Einfluss eines Objekts (D), das sich in einem Erfassungsbereich befindet, zwischen der ersten Elektrode, die das erste Erregungssignal (Sr1) empfängt, und der Ausgangselektrode, die am Ausgangsmesssignal (Sout) empfängt, bestimmt werden kann, dadurch, dass auch eine Projektion auf das orthogonale Signal (Sr2) erfolgt, um die Übertragungsfunktion fct(A1/A2) zu ergeben, und dadurch, dass eine Subtraktion der beiden Funktionen fct(A2/A1) und fct(A1/A2) erfolgt, um ein digitales Ausgangsmesssignal der Messschaltung (10) Fct(A1, A2) zu ergeben, das aus N Bits besteht.

9. Elektronische Vorrichtung (1), die dazu konfiguriert ist, das Verfahren nach einem der vorhergehenden Ansprüche zum Erfassen des Vorhandenseins und/oder zum Bestimmen mindestens einer Position mindestens eines Objekts (D) auf oder in der Nähe einer Messfläche der elektronischen Vorrichtung (1) auszuführen, wobei die Vorrichtung eine Messschaltung (10) umfasst, die mit dem Ausbreitungsmedium (2) für oszillierende Signale verbunden ist.

10. Elektronische Vorrichtung (1) nach Anspruch 9, **dadurch gekennzeichnet, dass** das Ausbreitungsmedium ein Netz aus Elektroden (2) kapazitiver Sensoren ist, das mehrere Elektroden (2) umfasst, die in Matrixform nahe beieinander angeordnet sind, wobei ein großer Teil der kapazitiven Elektroden (2) schwebend ist, das heißt, sie sind nicht durch Leiterbahnen mit der Messschaltung (10) oder mit benachbarten Elektroden verbunden, während bestimmte Elektroden (2) in der Peripherie durch Leiterbahnen mit der Messschaltung (10) verbunden sind, **dadurch gekennzeichnet, dass** zwei Eingangselektroden (2) in der Peripherie des ersten Teils des Netzes aus Elektroden angepasst sind, jeweils eines von zwei oszillierenden Signalen (Sr1, Sr2) zu empfangen, wobei die beiden Eingangselektroden (2) voneinander beabstandet sind, und dadurch, dass eine Ausgangselektrode (2) in der Peripherie des zweiten Teils des Netzes aus Elektroden angepasst ist, um ein Ausgangsmesssignal (Sout) zu empfangen, wobei die Eingangselektroden und die Ausgangselektroden so angeordnet sind, dass sie einen Erfassungsbereich der Messfläche komplett abdecken, um die Position eines Objekts (D) auf der Messfläche zu bestimmen.

11. Elektronische Vorrichtung (1) nach Anspruch 10, **dadurch gekennzeichnet, dass** das Netz aus Elektroden (2) aus Elektroden (2, 2', 2", 2‴) besteht, die eine Struktur in Form eines Kamms aufweisen, um teilweise mit jeder benachbarten Elektrode ineinander zu greifen, dadurch, dass jede Elektrode (2, 2', 2", 2‴) eine X-förmige Basis (2b) und Zähne (2p) umfasst, die sich von der X-förmigen Basis erstrecken und so bemessen sind, dass sie vier kleine Quadrate von jedem Zweig der Basis (2b) bilden, und dadurch, dass die vier kleinen Quadrate der Zähne (2p) mit der Basis (2b) jede quadratisch geformte Elektrode bilden, die es den Zähnen (2p) jedes kleinen Quadrats pro Elektrode ermöglicht, mit den Zähnen (2p) eines anderen kleinen Quadrats einer benachbarten Elektrode ineinander zu greifen.

12. Elektronische Vorrichtung (1) nach Anspruch 10, **dadurch gekennzeichnet, dass** das Netz aus Elektroden (2) aus einer Anordnung von Elektroden (2) mit quadratischer Form in Matrixform besteht, wobei der Abstand zwischen jeder Elektrode verringert ist.

13. Elektronische Vorrichtung (1) nach Anspruch 10, **dadurch gekennzeichnet, dass** das Netz aus Elektroden (2) aus Anordnung von Elektroden (2) mit sechseckiger Form besteht, die in Form von Waben verteilt sind, wobei der Abstand zwischen jeder Elektrode verringert ist.

14. Elektronische Vorrichtung (1) nach Anspruch 10, **dadurch gekennzeichnet, dass** das Netz aus Elektroden (2) angeordnet ist, um ein erstes Anregungssignal (Sr1) durch eine erste Elektrode und ein zweites orthogonales Signal (Sr2) durch eine zweite Elektrode, die von der ersten Elektrode beabstandet ist, zu empfangen und um ein Ausgangsmesssignal (Sout) an eine Ausgangselektrode auf der Grundlage einer Variation der oszillierenden Signale in Abhängigkeit eines auf der Messfläche platzierten Objekts (D) zu liefern, dadurch, dass eine Mess- und Anregungsvorrichtung (11) der Messschaltung (10) einen Analog-Digital-Wandler (21) umfasst, um das Ausgangssignal (Jump) in ein digitales umzuwandeln, dadurch, dass die Messschaltung (10) einen komplexen Projektionsoperator (22) umfasst, der ein digitales Signal von einer Einheit (25) des Anregungssignalprototyps des ersten Anregungssignals (Sr1) digital empfängt, um eine Projektion des digital umgewandelten Ausgangssignals (Sout) durchzuführen, dadurch, dass die Mess- und Anregungsvorrichtung (11) einen Phasenakkumulator Cplx (23) umfasst, der das Ausgangssignal des komplexen Projektionsoperators (22) empfängt und der den Real- und den Imaginärteil des digitalisierten Projektionssignals berücksichtigt, und dadurch, dass der Phasenakkumulator Cplx (23) ein digitales N-Bit-Signal der Ausgangsmessung (Sout) liefert, das dazu vorgesehen ist, in der anfänglichen Lernphase der elektronischen Vorrichtung (1) für jede Positionsmessung an eine Lernmaschine (16) übermittelt zu werden.

15. Elektronische Vorrichtung (1) nach Anspruch 14, **dadurch gekennzeichnet, dass** der Akkumulator (23) mit einer logischen Steuereinheit (24) verbunden ist, die einen Signalgenerator im digitalen Bereich umfassen kann, um die Einheit (25) des Anregungssignalprototyps des ersten Anregungssignals (Sr1) digital und eine Einheit (26) des Anregungssignalprototyps des zweiten Anregungssignals (Sr2) digital orthogonal zum ersten Signal (Sr1) zu steuern, dadurch, dass der Ausgang der Einheit (25) des Anregungssignalprototyps des ersten Anregungssignals (Sr1) in einem ersten Digital-Analog-Wandler (27) umgewandelt wird, um ein erstes oszillierendes Anregungssignal (Sr1) an das Netz aus Elektroden (2) zu liefern, und dadurch, dass der Ausgang der Einheit (26) des Anregungssignalprototyps des zweiten Anregungssignals (Sr2) in einem zweiten Digital-Analog-Wandler (28) umgewandelt wird, um ein zweites orthogonales oszillierendes Signal (Sr2) an das Netz aus Elektroden (2) zu liefern.

## Claims

1. A method for detecting the presence and/or determining at least one position of at least one object (D) on or near a measurement surface of an electronic device (1), which comprises an oscillating signal propagation medium (2) and a measurement circuit (10), for which the electronic device (1) comprises as propagation medium, an electrode array (2) of capacitive sensors, which comprises several electrodes (2) disposed close to one another in matrix form, a major part of the capacitive electrodes (2) being floating electrodes, that is to say without being connected by conductive tracks to the measurement circuit (10) or to the neighbouring electrodes, while some electrodes (2) at the periphery are connected by conductive tracks to the measurement circuit (10), the method comprising the steps of:
- providing at least two oscillating signals (Sr1, Sr2) at the input each to a respective input electrode (2) at the periphery of a first part of the electrode array, the two electrodes (2) receiving the oscillating input signals, being spaced from each other,
- receiving, by the at least two oscillating signals (Sout) having passed through the propagation medium (2), which defines a transfer function of the oscillating signals, at least one output measurement signal (Sout) by an output electrode at the periphery of a second part of the electrode array, the input electrodes and the output electrode being disposed to cover an entire detection area of the measurement surface,
- performing, in the measurement circuit (10), a measurement of a coupling or an attenuation induced by the presence on the at least two oscillating signals passing through the propagation medium of an object (D) placed on or near the measurement surface, so as to determine the position of the object (D) in the detection area of the measurement surface depending on the modification of the transfer function of the medium.

2. The method according to claim 1, for which the electronic device (1) is integrated into a portable instrument, such as for example an electronic or electromechanical watch, **characterised in that** an initial phase of learning the different positions of the object (D) on or near the measurement surface is carried out by a learning machine or apparatus (16) in communication with the electronic device (1), which transmits various measurements relating to the different positions of the object (D) on or near the measurement surface, **in that** at the end of the learning phase, the determination of the exact positions in X and Y of the object (D) on or near the measurement surface is performed by the learning machine (16) to define positions in X and Y of the different positions of the object (D) on or near the measurement surface, depending on the oscillating signals measured in the measurement circuit (10), and **in that** the different values X and Y of the different positions on the measurement surface are transmitted and memorised in a memory (14) of the measurement circuit (10) of the electronic device (1) to parameterise and configure the electronic device (1) to facilitate its subsequent determination of the position of any object (D) placed on or near the measurement surface.

3. The method according to claim 2, **characterised in that** firstly, the electronic device (1) communicates the various measurements of the object (D) on or near the measurement surface to the learning machine (16), which comprises a neural network to be trained.

4. The method according to one of claims 2 and 3, **characterised in that** the various measurements relating to the different positions of the object (D) on or near the measurement surface are provided to a neural network in the measurement circuit (10), which is parameterised with synaptic weights determined by the learning machine (16) used during the learning phase.

5. The method according to claim 2, **characterised in that**, in a possible subsequent phase, the learning machine can be a mobile phone (16) with a program guiding the user on the different patterns to be performed on the measurement surface, and adapted to perform wireless communication of data signals (Scom) with the electronic device (1), several successive digitised measurement signals of several positions of an object (D) on the measurement surface being transmitted to the mobile phone (16) by near-field communication for determining the position values in X and Y transmitted by the mobile phone (16) to the electronic device (1) to be configured.

6. The method according to claim 2, **characterised in that** in the initial learning phase, any movement of an object (D), such as a stylus or a person's finger on the measurement surface for the purpose of performing a signature within a defined time window or for the recognition of characters drawn on the measurement surface, is determined in the measurement signals transmitted by the electronic device (1), and **in that** the learning machine (16) transmits after this learning phase all the configuration parameters, which are synaptic weights to the electronic device (1) relating to the different values in X and Y of the different positions and the time component for the recognition of a signature or of drawn characters.

7. The method according to claim 1, **characterised in that** a first analogue wideband oscillating signal (Sr1) is provided to a first input electrode and **in that** a second analogue orthogonal oscillating signal (Sr2) is provided to a second electrode remote from the first electrode on the first part of the propagation medium.

8. The method according to claim 7, **characterised in that** a projection is made on the wideband signal in the measurement circuit (10) to give the transfer function fct(A2/A1) where A1 is the attenuation of the first excitation signal (Sr1) and A2 is the attenuation of the second orthogonal signal (Sr2) at the measurement point, and **in that** an influence of an object (D) placed in a detection area can be determined between the first electrode receiving the first excitation signal (Sr1) and the output electrode receiving the output measurement signal (Sout), **in that** a projection is also made on the orthogonal signal (Sr2) to give the transfer function fct(A1/A2), and **in that** the two functions fct(A2/A1) and fct(A1/A2) are subtracted to give an output digital measurement signal of the measurement circuit (10) Fct(A1, A2), which is on N bits.

9. An electronic device (1) configured to implement the method of one of the preceding claims for detecting the presence and/or determining at least one position of at least one object (D) on or near a measurement surface of the electronic device (1), the device comprising a measurement circuit (10) connected to the oscillating signal propagation medium (2).

10. The electronic device (1) according to claim 9, **characterised in that** the propagation medium is an array of capacitive sensor electrodes (2), which comprises several electrodes (2) disposed close to one another in matrix form, a major part of the capacitive electrodes (2) being floating electrodes, that is to say without being connected by conductive tracks to the measurement circuit (10) or to the neighbouring electrodes, while some electrodes (2) at the periphery are connected by conductive tracks to the measurement circuit (10), **characterised in that** two input electrodes (2) at the periphery of the first part of the array of electrodes are each adapted to receive respectively one of two oscillating signals (Sr1, Sr2), the two input electrodes (2) being spaced from each other, and **in that** an output electrode (2) at the periphery of the second part of the array of electrodes is adapted to receive an output measurement signal (Sout), the input electrodes and the output electrode being disposed to cover an entire detection area of the measurement surface to determine the position of an object (D) on the measurement surface.

11. The electronic device (1) according to claim 10, **characterised in that** the array of electrodes (2) consists of electrodes (2, 2', 2", 2‴) having a comb-shaped structure to partially interlock with each neighbouring electrode, **in that** each electrode (2, 2', 2", 2‴) comprises an X-shaped base (2b), and teeth (2p) extending from the X-shaped base and dimensioned to form four small squares from each branch of the base (2b), and **in that** the four small squares of teeth (2p) with the base (2b) form each square-shaped electrode allowing the teeth (2p) of each small square per electrode to interlock with the teeth (2p) of another small square of a neighbouring electrode.

12. The electronic device (1) according to claim 10, **characterised in that** the array of electrodes (2) consists of a set of square-shaped electrodes (2) in matrix form with a reduced space between each electrode.

13. The electronic device (1) according to claim 10, **characterised in that** the array of electrodes (2) consists of a set of electrodes (2) which are of hexagonal shape and distributed as a honeycomb with a reduced space between each electrode.

14. The electronic device (1) according to claim 10, **characterised in that** the array of electrodes (2) is arranged to receive a first excitation signal (Sr1) by a first electrode and a second orthogonal signal (Sr2) by a second electrode spaced from the first electrode, and to provide a measurement output signal (Sout) to an output electrode based on the variation of the oscillating signals depending on an object (D) placed on the measurement surface, **in that** a measurement and excitation device (11) of the measurement circuit (10) comprises an analogue-to-digital converter (21) for converting the output signal (Sout) into a digital signal, **in that** the measurement circuit (10) comprises a complex projection operator (22), which receives a digital signal from a unit (25) of the excitation signal prototype of the first excitation signal (Sr1) into a digital signal to make a projection of the output signal (Sout) converted into a digital signal, **in that** the measurement and excitation device (11) comprises a phase accumulator Cplx (23) receiving the output signal from the complex projection operator (22), and which takes into account the real and imaginary parts of the digitised projection signal, and **in that** the phase accumulator Cplx (23) provides an N-bit digital signal of the output measurement (Sout), which is intended to be transmitted for each position measurement to a learning machine (16) during the initial learning phase of the electronic device (1).

15. The electronic device (1) according to claim 14, **characterised in that** the accumulator (23) is connected to a logic control unit (24), which may comprise a generator of signals in the digital domain to control the unit (25) of the excitation signal prototype of the first excitation signal (Sr1) into a digital signal and a unit (26) of the excitation signal prototype of the second excitation signal (Sr2) into a digital signal orthogonal to the first signal (Sr1), **in that** the output of the unit (25) of the excitation signal prototype of the first excitation signal (Sr1) is converted in a first digital-to-analogue converter (27) to provide a first oscillating excitation signal (Sr1) to the electrode array (2), and **in that** the output of the unit (26) of the excitation signal prototype of the second excitation signal (Sr2) is converted in a second digital-to-analogue converter (28) to provide a second oscillating signal (Sr2) orthogonal to the electrode array (2).
